# EUROPÄISCHE PATENTSCHRIFT

(11) **EP 0 726 108 B1**
(45) Veröffentlichungstag und Bekanntmachung des Hinweises auf die Patenterteilung: **04.03.1998**
(21) Anmeldenummer: 96101256.4
(22) Anmeldetag: 30.01.1996
(51) Int. Cl.: B21F 11/00

(54) **Vorrichtung zum gratfreien Schneiden von Drähten oder Metallstäben**
Device for cutting wires or bars without burrs
Dispositif pour le coupage de fils et barres sans bavures

(30) Priorität: 01.02.1995 DE 19503091
(43) Veröffentlichungstag der Anmeldung: 14.08.1996
(73) Patentinhaber: Scheuregger, Siegfried, 67240 Bobenheim-Roxheim (DE)
(72) Erfinder: Schreier, Alrik, 68169 Mannheim (DE)
(74) Vertreter: Zellentin, Wiger, Dipl.-Ing.

(56) Entgegenhaltungen:
- DE-A- 2 142 703
- PATENT ABSTRACTS OF JAPAN vol. 9, no. 316 (M-438) [2039] , 12.Dezember 1985 & JP-A-60 150903 (UBE KOSAN KK), 8.August 1985,
- PATENT ABSTRACTS OF JAPAN vol. 10, no. 37 (M-453) [2094] , 14.Februar 1986 & JP-A-60 191716 (SHIN NIPPON SEITETSU KK), 30.September 1985,

## Beschreibung

Die vorliegende Erfindung betrifft eine Vorrichtung zum gratfreien Schneiden von Drähten oder Metallstäben.

Bekannte Vorrichtungen zum Schneiden von Drähten (oder Stäben) bestehen aus Schneidklingen sowie zur Kraftverstärkung an diesen angeordneten Hebeln, wobei die Schneidklingen Teile von gelenkig miteinander verbundenen Schneidbacken sind.

Aus dem deutschen Gebrauchsmuster 17 05 779 ist ein solches Schneidwerkzeug für Drähte bekannt, bei welchem die Schneidbacken keilförmige, leicht abgeflachte Schneiden aufweisen. Dabei soll beim Schneidvorgang der Werkstoff zunächst eingekerbt und danach durch seitlichen Druck der in das Material eindringenden, leicht keilförmigen Schneiden abgerissen werden. Die Backen haben ferner Profilausnehmungen, welche den Querschnittsformen des zu schneidenden Materials angepaßt sind.

Mit einer solchen Vorrichtung lassen sich Drähte (oder Metallstäbe) nicht gratfrei schneiden, d.h. daß wegen der hierdurch bedingten Verletzungsgefahr die Teile nachbearbeitet werden müssen.

Die vorliegende Erfindung hat sich daher die Aufgabe gestellt, eine neue Klingenanordnung für solche Schneidbacken zu schaffen, mit deren Hilfe ein gratfreier Schnitt möglich wird.

In einer erfinderischen Weiterentwicklung einer solchen Vorrichtung soll es ferner möglich sein, bei sich kreuzenden Drähten oder Stäben diese unmittelbar am Kreuzungsbereich abzutrennen, wie dies z.B. beim Zuschnitt von Kabelgitterrinnen oder Baustahlmatten erforderlich ist, wobei der Schnitt ebenfalls gratfrei erfolgt und kein über den Kreuzungspunkt, d.h. der Mantellinie des Nachbarstabes, überstehender Stumpf verbleibt. Dabei soll die Handhabung einfach sein und Fehler nicht zulassen.

Die Lösung dieser Aufgabe gelingt mit einer Vorrichtung zum gratfreien Schneiden von Drähten oder Rundstäben, wobei diese zwei aneinander gelenkig befestigte Schneidbacken mit ausgerundeten Klingen besitzt, bei welcher die Klingen einander zugekehrte gerade, etwa senkrecht auf den zu schneidenden Draht gerichtete Schneidflanken und ferner unter einem Winkel α von etwa 45 bis 60° an die Schneidflanken anschließende Verdrängungsflanken aufweisen. An die Verdrängungsflanken schließen sich etwa rechtwinklig zu den Schneidflanken der Klinge liegende Anlageflächen an, die Höhe der Klingen über den Anlageflächen beträgt je etwa 1/3 bis 1/4 des Durchmessers des zu schneidenden Drahtes, und gegenüberliegend zu den Anlageflächen weisen die Schneidflächen einen Freiraum auf.

Der Schneidvorgang eines Metallprofils läuft dabei folgendermaßen ab: anfänglich dringt die Klinge in das Metall ein und prägt dieses jeweils mit den Verdrängungsflanken unter ihren Winkeln von etwa 45 - 60° gegenüberliegend auf dem halben Umfang, wobei die senkrechten Bereiche das Metall schneiden, ohne zunächst eine Anfasung zu bewirken. Dadurch, daß die parallel zur Werkstückachse liegenden Anlageflächen am Werkstück anliegen, bevor die Klingen die Mittelachse des zu schneidenden Materials erreichen, kann der Schneidvorgang als solcher auch nicht vollendet werden. Die vollständige Trennung der Materialteile geschieht erfindungsgemäß auch nicht durch den Schnitt allein, sondern zusätzlich durch Bruch eines die Mittelachse umgehenden Bereiches unter Verformung des Drahtes oder Stabes, wobei die gegenüber liegenden Anlageflächen der Schneidbacken das gestreckte Profil soweit abwinkeln, bis dieses bricht bzw. abschert. Die dabei auftretenden Kräfte bewirken jedoch eine Anfasung unter Materialfluß der glatt geschnittenen Bereiche, wobei sich diese Draht- oder Stabbereiche an den geraden Schneidflanken mit ihren runden Kanten abstützen und dabei angefast werden.

Dieser Vorgang wird unterstützt durch den relativ steilen Winkel der Verdrängungsflanken, die mit dem Abbiegen durch die Anlageflächen gleichsinnig wirken, d.h. einen Kraftvektor senkrecht auf die Werkstückachse ebenso wie parallel zu dieser ausüben, so daß zum Abwinkelvorgang ein Zug in Längsrichtung auftritt, wobei die Vektoren bei einem Klingenwinkel von α = 45° naturgemäß gleich groß sind.

Durch einen solchen Trennvorgang entstehen überraschenderweise glatte, gratfreie Schnittflächen und -kanten, die angefast sind, so daß von den Schnittstellen keine Verletzungsgefahr mehr ausgeht.

Insbesondere weisen die Anlageflächen dabei eine dem zu schneidenden Profil angepaßte Kehle auf, um die Drähte gegen seitliches Ausweichen zu halten bzw. die Vorrichtung zu führen.

Ein besonders vorteilhafter Anwendungszweck der vorliegenden Erfindung ist das Ablängen von kreuzweise aneinander befestigtem (verschweißtem) Gitterwerk, wie z.B. Kabelgitterrinnen oder auch Baustahlmatten oder Zäune. Bei derartigem Gitterwerk ist es beim Verlegen erforderlich, diese an die besonderen Anwendungsbedingungen anzupassen, wozu sie gekürzt, teilgekürzt oder geöffnet werden müssen. Im Falle der Anwendung auf Kabelgitterrinnen müssen diese nach dem Abtrennen einzelner Stäbe an den Schnittstellen mühsam nachbearbeitet werden, da herkömmliche dazu verwendbare Schneidvorrichtungen scharfkantige, nicht gratfreie Schnittstellen hinterlassen. Da dieses Nacharbeiten durch Abschleifen sehr zeitaufwendig ist, wird es oft unterlassen, was unter anderem auch zum Zerstören der Kabelisolierungen bei deren Verlegen führen kann. Dabei tritt erschwerend hinzu, daß die zum Inneren der Kabelgitterrinne gerichteten Bereiche der Schnittkanten nur schwer erreichbar sind und daß der Schnitt nicht unmittelbar am Kreuzungspunkt, d.h. am senkrechten Nachbarstab, erfolgen kann, so daß nach dem Schnitt ein Stumpf verbleibt, der als solcher schon nachteilig ist.

Zum Schneiden derartiger Kreuzstellen wird weiterhin eine Variante der Erfindung vorgeschlagen, bei welcher in die Vorderkante der Schneidbacken eine ausgerundete Ausnehmung eingeformt ist, deren Mittelachse senkrecht zur insbesondere gekehlten Anlagefläche verläuft.

Diese Ausnehmung wird beim Schnitt an den nicht zu schneidenden Draht des Kreuzungspunktes gelegt und bewirkt eine seitliche Fixierung der Vorrichtung am nicht zu schneidenden Stab, so daß zusammen mit der rechtwinklig dazu verlaufenden Anlagekehle am zu schneidenden Stab eine unverrückbare dreidimensionale Festlegung des Werkzeugs gewährleistet ist. Unter diesen Bedingungen entstehen an den Kabelgitterrinnen Trennstellen, deren Qualität ansonsten nur mit sehr zeitaufwendigen Nacharbeiten erreichbar ist. Die erfindungsgemäße Raumform mit der Anpassung der Führungsmittel an die exakte Geometrie der Kreuzpunkte erlaubt es weiterhin, Kabelgitterrinnen problemlos auch nach dem Verlegen von Kabeln oder Schläuchen zu schneiden.

Dabei entspricht die Tiefe der Ausnehmung vorzugsweise etwa dem Durchmesser des zu schneidenden Stabes oder Drahtes, vermindert um die Tiefe der Klinge, d.h. dem Abstand von der Schneidkante zur Anlagefläche bzw. zusätzlich vermindert um die beim Schweißen der Kreuzungsstelle entstehende Verschmelzungszugabe.

Da an die Klingen gegebenenfalls hohe Materialanforderungen gestellt werden, bestehen sie vorteilhaft aus einem gehärteten, hochlegierten Werkzeugstahl, z.B. der Werkstoffnummer 1.2767 (Kurzname X54NiCrMo4).

Anhand der beiliegenden Figuren wird die vorliegende Erfindung näher erläutert.
- **Figur 1**: zeigt eine erfindungsgemäße Schneidbacke in Seitenansicht
- **Figur 2**: zeigt diese in Stirnansicht,
- **Figur 3**: zeigt daraus eine Detailansicht,
- **Figur 4**: zeigt die Schneidbacke in Draufsicht,
- **Figur 5**: zeigt eine Detailvergrößerung der Klinge,
- **Figur 6**: zeigt einen Schnitt durch Fig. 4,
- **Figur 7** und **Figur 7a**: stellen den Schneidvorgang dar,
- **Figur 8**: zeigt das Schneiden einer Kabelgitterrinne in Draufsicht und
- **Figur 9**: dieses in Seitenansicht.

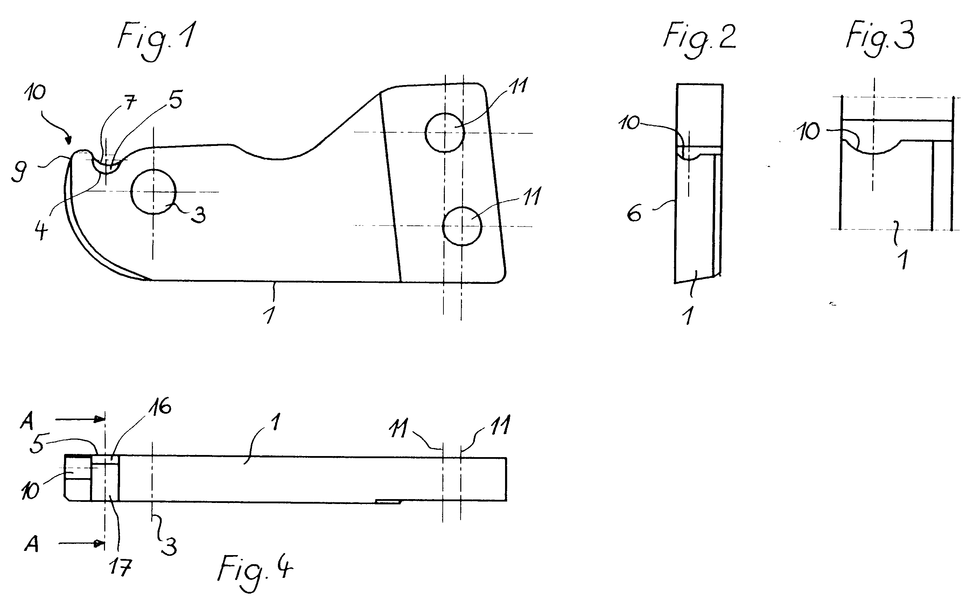

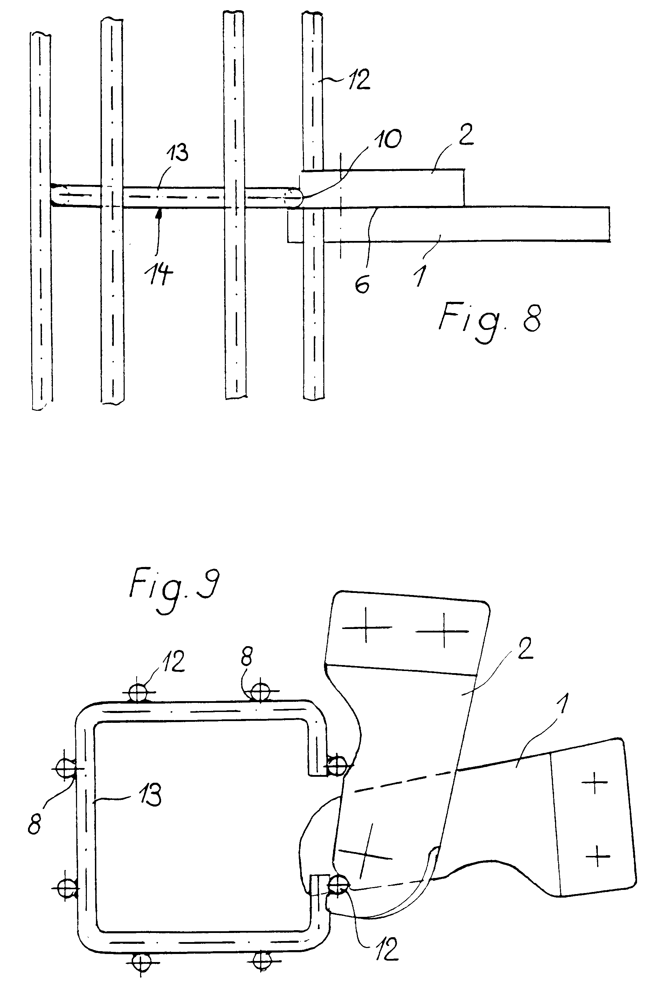

**Figur 1** zeigt die Schneidbacke 1 mit zwei rückwärtigen Bohrungen 11 zur Anbringung eines Hebels (nicht dargestellt). Weiterhin besitzt die Backe 1 eine Achse 3 zur gelenkigen Verbindung mit der Gegenbacke 2 (Figur 8, 9).

Vor der Achse liegt oben als Anlagefläche eine Kehle 4, die vorzugsweise etwa den Radius des zu schneidenden Stabes aufweist. An die Kehle 4 schließt sich (zur Gegenbacke) die Klinge 5 mit der Schneidkante 7 an. Diese ist ebenfalls ausgerundet.

In die Vorderkante 9 ist vorzugsweise zum Schneiden kreuzweise verschweißter Stäbe rechtwinklig zur Kehle 4 eine Ausnehmung 10 eingeformt, die ebenfalls etwa den Radius des hierbei nicht zu schneidenden Stabes besitzt. Sie ist wesentlich für die Führung und Abstützung der Schneidewerkzeuge am nicht zu schneidenden, rechtwinklig zum schneidenden verlaufenden Stab.

In **Figur 2** ist diese Ausnehmung 10 an der Oberfläche der Schneidbacke 1 erkennbar. Diese ist so angeordnet, daß bei Anlage der gleichgeformten Gegenbacke an einen nicht zu schneidenden Stab einer Kreuzverbindung dieser Stab mit der Seitenflanke 6 in einer Flucht liegt, wobei ebenfalls die Oberkante 7 der Klinge 5 (Figur 1) mit diesem fluchtet, so daß der Schnitt im zu schneidenden Stab unmittelbar am nicht zu schneidenden Stab einer Kreuzverbindung liegt.

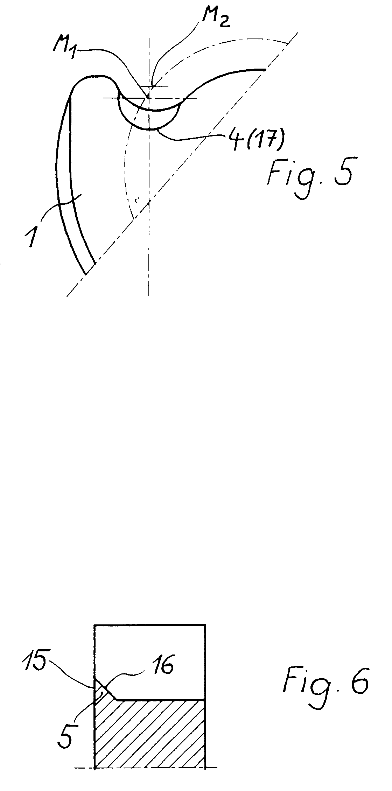

In **Figur 3** ist eine Vergrößerung aus Figur 2. Die ausgerundete Ausnehmung 10 weist etwa den gleichen Radius auf wie die Klinge 5 (Fig. 1) bzw. die Mulde 17' (Fig. 4), wobei die Mittelachsen der Ausnehmungen 10 innerhalb des Querschnitts des quer dazu liegenden, zu schneidenden Drahtes liegen können.

**Figur 4** zeigt von oben gesehen die Schneidbacke 1 mit den rückwärtigen Bohrungen 11 sowie der Achse 3. Weiterhin ist die Klinge 5 mit der Verdrängungsflanke 16 erkennbar sowie die anschließende Anlagefläche 17, an der der zu schneidende Stab oder Draht nach dem Eindringen und vor dem Schließen der Klingen anliegt. Vor der Klinge liegt die Ausnehmung 10 zur Führung des Werkzeuges an sich kreuzenden Stäben.

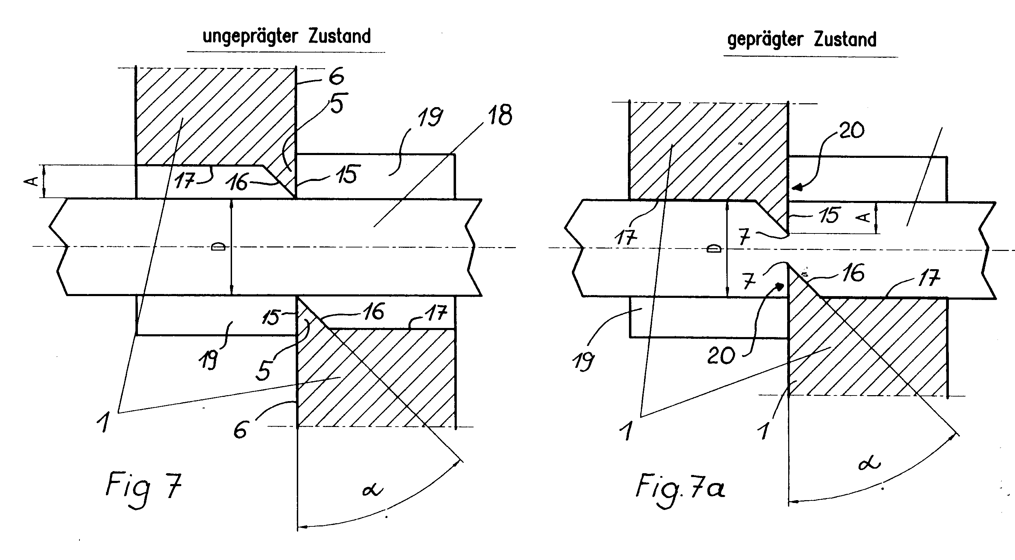

Zur Veranschaulichung zeigt **Figur 5** in Vergrößerung den Schneidbereich der Schneidbacke 1 mit der Schneidkante 7 und der Klinge 5, die nach innen, d.h. von der Schneidkante weg als Verdrängungsflanke (16, Fig. 7, 8) ausgebildet ist. Der Mittelpunkt M₁ ist dabei der Mittelpunkt des Radius der Kehle 4, M₂ stellt das Zentrum eines 45 - 60°-Fräsers zur Herstellung der Verdrängungsflanke dar.

**Figur 6:** Der Schnitt AA aus der Figur 4 veranschaulicht die Geometrie der Klinge 5 mit ihrer Verdrängungsflanke 16 sowie der Schneidflanke 15, die zwischen sich einen Winkel von etwa 45 - 60° einschließen, sowie der an die Verdrängungsflanke 16 anschließenden Anlagefläche 17.

**Figur 7** zeigt das Werkzeug mit an einen Draht 18 angelegten Klingen 5 im Schnitt, wobei die Klingen 5 je eine einander zugekehrte Schneidflanke 15 und unter einem Winkel α von 45 - 60° dazu je eine Verdrängungsflanke 16 aufweisen. An die Verdrängungsflanken 16 schließen sich parallel zur Drahtoberfläche Anlageflächen 17 an, die vorzugsweise als Mulden mit dem Drahtradius ausgebildet sind. Die Schneidflanken 15 der Klingen 5 sind Fortsetzungen der Seitenflanken 6 und stoßen senkrecht auf den Draht 18.

**Figur 7a** zeigt den geschlossenen Zustand der Schneidbacken 1 und 2. Die Klingen 5 sind in das Profil des Drahtes 18 vollständig eingedrungen, der Draht 18 liegt oben und unten an den Anlageflächen 17 beidseitig an. Zwischen den Schneidkanten 7 der Klingen 5 verbleibt erkennbar und für die Erfindung von wesentlicher Bedeutung ein Abstand, wobei die Klingentiefe A 1/4 bis 1/3 des Drahtdurchmessers D beträgt, mit anderen Worten, in geschlossenem Zustand der Schneidbacken 1 und 2 verbleiben 1/3 bis 1/2 des Drahtquerschnittes ungeschnitten. Bewegt man nunmehr die Schneidbacken weiter aufeinander zu, so biegen die Anlageflächen 17 den Draht beidseitig weg von den Verdrängungsflanken 16 in den gegenüberliegenden Freiraum 19, was dazu führt, daß die der Verdrängungsfläche 17 gegenüberliegende, schon von der Schneidflanke 15 geschnittene Kante 20 unter Materialfluß gegen diese Schneidflanke gepreßt wird, was einmal zu einer Anfasung und Entgratung führt, zum anderen aber durch die von den Verdrängungskanten 16 bewirkten Scher- und Schubkräfte ein Brechen des ungeschnittenen Restquerschnitts bewirkt, und überraschenderweise zu einer völlig ebenen Schnittfläche führt, wobei die Ränder der Schnittstellen völlig gratfrei und angeschrägt sind und somit keine scharfkantigen Bereiche durch den Schnitt entstehen.

**Figur 8** zeigt die Längsstäbe 12 und die Querholme 13 einer Kabelgitterrinne, bei deren Zuschnitt das erfindungsgemäße Werkzeug mit großem Vorteil einsetzbar ist. Die Gegenbacke 2 liegt dabei mit ihrer Ausnehmung 10 gegen den Querholm an, sichert die Vorrichtung gegen Verrutschen und richtet diese zwangsläufig exakt aus. Gleichzeitig liegt die Gegenbacke 2 mit ihrer Kehle von oben auf dem zu schneidenden Stab 12 auf. Dabei liegt die Seitenflanke 6 und damit auch die Schneidflanke (15; z.B. Fig. 7) an der Mantellinie 14 des zu schneidenden Stabes 12 unmittelbar an. Die Tiefe der Ausnehmung 10 weist dabei das in der vorstehenden Beschreibung angegebene Maß auf.

Hierbei ist festzuhalten, daß Schneidbacke 1 und Gegenbacke 2 gleich aufgebaut sind.

Die Gegenbacke 2 greift in vorliegender Darstellung von oben gegen den Längsstab 12 und liegt mit der Ausnehmung 10 gegen den Querholm 13 der Gitterrinne an, so daß hierdurch eine zweifache Führung und Sicherung des Werkzeugs gegen Verrutschen entsteht. Die Schneidbacke 1 greift von unten an, so daß der Schnitt dank der erfindungsgemäßen Geometrie des Werkzeugs gratfrei und ohne Überstand bewerkstelligt wird. Da ein Nacharbeiten somit entfällt, ergibt sich bei der Bearbeitung von Kabelgitterrinnen eine Zeitersparnis von etwa 75 %.

Zur Veranschaulichung des Schneidvorgangs ist in **Figur 9** dieser nochmals in Seitenansicht gezeigt. Man erkennt einen Querholm 13 sowie mehrere zu schneidende und über Schweißstellen 8 miteinander verbundene Längsstäbe 12, wobei vorliegend der Schnitt vom Betrachter aus gesehen hinter dem Querholm 13 liegt. Als Material der Backen 1, 2 kann der folgende gehärtete Werkzeugstahl mit der nachstehenden Zusammensetzung verwendet werden: 0,4 - 0,5 C; 0,1 - 0,4 Si; 0,15 - 0,45 Mn; < 0,03 P, S; 1,2 - 1,5 Cr; 0,15 - 0,35 Mo; 3,8 - 4,3 Ni; Rest Eisen FE (Angaben in %).

### Bezugszeichenliste

- 1: Schneidbacke
- 2: Gegenbacke
- 3: Achse
- 4: Kehle
- 5: Klinge
- 6: Seitenflanke
- 7: Schneidkante
- 8: Schweißstellen
- 9: Vorderkante
- 10: Ausnehmung
- 11: rückwärtige Bohrungen
- 12: Längsstäbe
- 13: Querholme
- 14: Mantellinie
- 15: Schneidflanke
- 16: Verdrängungsflanke
- 17: Anlagefläche
- 18: Draht
- 19: Freiraum
- 20: Kante

## Patentansprüche

1. Vorrichtung zum gratfreien Schneiden von Drähten oder Rundstäben, wobei diese zwei aneinander gelenkig befestigte Schneidbacken mit ausgerundeten Klingen besitzt, **gekennzeichnet durch** die folgenden Merkmale:
a) die Klingen (5) weisen einander zugekehrte gerade, etwa senkrecht auf den zu schneidenden Draht (18) gerichtete Schneidflanken (15) auf;
b) die Klingen (5) weisen ferner unter einem Winkel α von etwa 45 bis 60° an die Schneidflanken (15) anschließende Verdrängungsflanken (16) auf;
c) an die Verdrängungsflanken (16) schließen sich etwa rechtwinklig zu den Schneidflanken (15) der Klinge (5) liegende Anlageflächen (17) an;
d) die Höhe A der Klingen (5) über den Anlageflächen (17) beträgt je etwa 1/3 bis ¼ des Durchmessers D des zu schneidenden Drahtes (18);
e) gegenüberliegend zu den Anlageflächen (17) weisen die Schneidbacken (1, 2) einen Freiraum (19) auf;

2. Vorrichtung nach Anspruch 1, **dadurch gekennzeichnet**, daß die Anlageflächen (17) als der Oberfläche des Drahtes (18) angepaßte Kehlen (4) ausgebildet sind.

3. Vorrichtung nach Anspruch 1 oder 2, **dadurch gekennzeichnet**, daß zum Schneiden kreuzweise miteinander verbundener Drähte in die Vorderkante (9) der Schneidbacken (1, 2) eine ausgerundete Ausnehmung (10) eingeformt ist, deren Mittelachse senkrecht zur muldenförmigen Anlagefläche (17) verläuft.

4. Vorrichtung nach einem oder mehreren der Ansprüche 1 bis 3, **dadurch gekennzeichnet**, daß die Tiefe der Ausnehmung (10) etwa dem Durchmesser des zu schneidenden Drahtes vermindert um die Klingentiefe A entspricht.

5. Vorrichtung nach einem oder mehreren der Ansprüche 1 bis 4, **dadurch gekennzeichnet**, daß mindestens der Schneidbereich der Backe (1) aus gehärtetem, hochlegiertem Werkzeugstahl besteht.

## Claims

1. Device for the burr-free cutting of wires or round rods, whereby this possesses two cutting jaws articulatedly connected to one another with rounded blades, characterised by the following features:
a) the blades (5) have straight cutting flanks (15) facing one another directed approximately vertically to the wire (18) to be cut;
b) furthermore, at an angle α of about 45 to 60° to the cutting flanks (15), the blades (5) subsequently have displacement flanks (16);
c) on the displacement flanks (16) follow bearing surfaces (17) lying approximately at right angles to the cutting flanks (15) of the blades (5);
d) the height A of the blades (5) above the bearing surfaces (17) amounts in each case to approximately 1/3 to 1/4 of the diameter D of the wire (18) to be cut;
e) lying opposite the bearing surfaces (17), the cutting jaws (1,2) have a free space (19).

2. Device according to claim 1, characterised in that the bearing surfaces (17) are formed as grooves (4) adapted to the surface of the wire (18).

3. Device according to claim 1 or 2, characterised in that, for the cutting of wires connected crosswise with one another, in the front edge (9) of the cutting jaws (1,2) is formed a rounded recess (10), the middle axis of which runs vertically to the trough-shaped bearing surface (17).

4. Device according to one or more of claims 1 to 3 characterised in that the depth of the recess (10) corresponds to about the diameter of the wire to be cut diminished by the blade depth A.

5. Device according to one or more of claims 1 to 4, characterised in that at least the cutting region of the jaw (1) consists of hardened, high alloy tool steel.

## Revendications

1. Dispositif pour le découpage sans bavures de fils et de barres rondes, celui-ci comportant deux mâchoires de découpage fixées l'une sur l'autre par une articulation et disposant de lames arrondies, **caractérisé** par les caractéristiques suivantes :
a) les lames (5) comportent des flancs de découpage (15) droits, tournés l'un vers l'autre, orientés à peu près verticalement vers le fil à découper (18) ;
b) les lames (5) présentent par ailleurs des flancs de déplacement (16) placés à la suite des flancs de découpage (15), à un angle α d'environ 45 à 60 degrés ;
c) à la suite des flancs de déplacement (16) sont placées des faces de contact (17) à peu près perpendiculairement aux flancs de découpage (15) de la lame (5) ;
d) la hauteur A des lames (5) au-dessus des faces de contact (17) correspond à à peu près 1/3 à 1/4 du diamètre D du fil à découper (18) ;
e) en face des faces de contact (17), les mâchoires de découpage (1, 2) comportent un espace libre (19) :

2. Dispositif selon revendication 1, **caractérisé en ce que** les faces d'appui (17) sont configurées en tant que gorges (4) adaptées à la surface du fil (18).

3. Dispositif selon la revendication 1 ou 2, **caractérisé en ce que** pour le découpage de fils reliés ensemble en croix, un évidement arrondi (10) est pratiqué sur le bord avant (9) des mâchoires de découpage (1, 2), évidement dont l'axe central s'étend verticalement par rapport à la face de contact en forme de cavité (17).

4. Dispositif selon l'une ou plusieurs des revendications 1 à 3, **caractérisé en ce que** la profondeur de l'évidement (10) correspond à peu près au diamètre du fil à découper, diminué de la profondeur de lame A.

5. Dispositif selon l'une ou plusieurs des revendications 1 à 4, **caractérisé en ce qu'**au moins la zone de découpage de la mâchoire (1) est en acier à outils durci et fortement allié.
